# EUROPEAN PATENT APPLICATION

(11) **EP 3 546 427 A1**
(43) Date of publication of application: **02.10.2019**
(21) Application number: 16922486.2
(22) Date of filing: 29.12.2016
(51) Int. Cl.: C01G 43/00, G21C 3/46

(54) **LARGE-PARTICLE-SIZE AMMONIUM URANATE HYDRATE CRYSTAL, AND PREPARATION METHOD AND APPARATUS THEREFOR**

(30) Priority: 22.11.2016 KR 20160155955
(71) Applicant: Kepco Nuclear Fuel Co., Ltd, Daejeon 34057 (KR)
(72) Inventor: BAE, Youngmoon, Daejeon 34034 (KR); YANG, Seungchul, Daejeon 34121 (KR); LEE, Byungkuk, Sejong 30098 (KR); KWAK, Dongyong, Daejeon 34130 (KR); CHO, Hyunkwang, Daejeon 34130 (KR); GU, Sunghoi, Daejeon 34524 (KR); HWANG, Euijun, Daejeon 34085 (KR)
(74) Representative: Peterreins Schley
(86) International application number: PCT/KR2016/015453
(87) International publication number: WO 2018/097393

(57) **Abstract**

The present invention relates to a large-particle-size ammonium uranate hydrate crystal, and a preparation method therefor. The present invention, unlike a conventional ADU process in which a uranyl nitrate aqueous solution and ammonia water are reacted, controls a reaction rate by injecting gaseous ammonia into a uranyl nitrate aqueous solution, such that the particle diameter of ammonium uranate hydrate crystals to be generated can be increased, and in the experimental result, the average particle size of finally prepared ammonium uranate hydrate crystals was 9.32-14.68 µm, which is at least 100 times greater than that of crystals prepared by the conventional ADU process. In addition, in a filtrate analysis result, the uranium content was less than 1 ppm. Since the diameter of the ammonium uranate hydrate crystals prepared according to the present invention is very large compared to those of the conventional crystals, handling in filtration, drying and roasting/reduction processes, which are subsequent processes, is much easier than in the conventional ADU process and designing apparatuses for the subsequent processes is also simpler than that of the conventional process, and since a filtrate generated in a filtration process hardly contains uranium, a separate chemical treatment process for uranium recovery is unnecessary, and thus facility investment costs can be greatly reduced.

## Description

### Technical Field

The present invention relates to a process for chemical precipitation of a uranium compound during the fabrication of nuclear fuel, and particularly to a method and apparatus for manufacturing a large-particle-size crystal, which is made easy to handle in subsequent processes by improving an ADU process in which uranium is precipitated and separated in the form of ammonium uranate hydrate (AUH) through the reaction of a uranyl nitrate aqueous solution and ammonia and to an ammonium uranate hydrate (AUH) crystal manufactured by the method.

### Background Art

Nuclear fuel fabrication processes are largely divided into wet processes (ADU process, AUC process, etc.), in which uranium is provided in the form of an aqueous solution, and dry processes (DC process, IDR process, etc.), in which uranium is not provided in the form of an aqueous solution. A wet process is disadvantageous compared to a dry process because it is complicated, requires a large number of chemical substances to be used and generates liquid waste, but the UO₂ powder thus obtained is superior in characteristics (specific surface area, particle size distribution, fluidity, etc.) compared to the dry process and thus the wet process is still widely utilized.

In a wet process, a denitrification process has to be performed first in order to convert uranium into uranium oxide for nuclear fuel from a UNH (uranyl nitrate hexahydrate) aqueous solution in which uranium is dissolved in nitric acid. Although there are many kinds of denitrification processes, the most widely used process in the world includes the precipitation of uranium in the form of ADU (ammonium diuranate) or AUC (ammonium uranyl carbonate), serving as an intermediate material, followed by filtration, drying, and calcination/reduction. Here, the process using ADU and the process using AUC as the intermediate material are called an ADU process and an AUC process, respectively. In particular, the present invention is directed to an ADU process, and below is a general description of the ADU process.

The name "ADU" refers to the chemical composition of the substance, simplified to (NH₄)₂U₂O₇, but actually it is in the form of (UO₃)·xNH₃·yH₂O (ammonium uranate hydrate, AUH) at room temperature, and four kinds of compositions are known. Specifically, ADU and AUH are substantially the same as each other, and in order to distinguish them, the conventional process is referred to as an ADU process and the process according to the present invention is referred to as an AUH process.

Typically, when designing an ADU process, the following reaction mechanism is assumed.

2UO₂(NO₃)₂ (aq) + 6NH₄OH (aq) → (NH₄)₂U₂O₇ (s) + 4NH₄NO₃ (aq) + 3H₂O (l)

Therefore, the conventional ADU process includes reacting a mixture comprising a uranyl nitrate aqueous solution and ammonia water in a crystallizer during the actual operation, and is almost the same as the ADU process that is used abroad.

Since the conventional ADU process has advantages such as the small variety of chemical substances to be used and the relatively small amount of liquid waste that is generated, compared to the AUC process, it is used more than the AUC process. However, the resulting ammonium uranate hydrate particles are as fine as an average particle size of 0.1 µm or less, and thus filtration and drying thereof are difficult and handling thereof in subsequent processes (drying, calcination/reduction) is also very difficult. Furthermore, since the uranium concentration of the filtrate discharged from the filtration process is as high as 20 ppm or more, there is a disadvantage in that an additional chemical treatment process is required in order to recover uranium from the filtrate.

### Disclosure

### Technical Problem

Accordingly, the present invention is intended to provide the formation of a large-particle-size ammonium uranate hydrate crystal, which is easy to handle in subsequent processes, whereby handling thereof is easy in subsequent filtration, drying and calcination/reduction processes, the design of devices for subsequent processes is also simpler than that of the conventional process, and little uranium is contained in the filtrate generated in the filtration process.

### Technical Solution

The present invention provides a method of manufacturing an ammonium uranate hydrate crystal, suitable for the precipitation and separation of uranium, the method comprising: (1) placing a uranyl nitrate aqueous solution as a mother liquor in a crystallizer; (2) forming crystals by injecting ammonia gas into the mother liquor and carrying out a crystallization reaction; and (3) stopping the crystallization reaction when the pH of the mother liquor is in the range of 7 to 8.

In step (1), the uranium concentration of the mother liquor may be 5 to 100 g/L.

In step (2), the ammonia gas may be injected at a flow rate of 0.1 to 5.0 Nm³/hr.

In step (2), air may be supplied together with the ammonia gas, and the flow rate of the air may be 10 to 100 times the flow rate of the ammonia gas.

In addition, the present invention provides an ammonium uranate hydrate crystal manufactured by the above method.

In addition, the present invention provides an ammonium uranate hydrate crystallizer, comprising: a crystallizer chamber 1 having a mother liquor circulation pipe 2; and an ammonia distributor 3 directly provided to the mother liquor circulation pipe 2.

### Advantageous Effects

According to the present invention, the finally manufactured ammonium uranate hydrate crystal has an average particle size of 9.32 to 14.68 µm, which is found to be 100 times or more as large as a crystal made through a conventional ADU process, based on experimental results. Also, the uranium content is less than 1 ppm based on results of filtrate analysis.

Therefore, the particle size of the ammonium uranate hydrate crystal manufactured by the present invention is quite large compared to the conventional process, and thus handling thereof in subsequent processes such as filtration, drying and calcination/reduction processes is much easier than the conventional ADU process, and the design of devices for subsequent processes is also simple compared to the conventional process. Furthermore, little uranium is contained in the filtrate generated in the filtration process, thus obviating an additional chemical treatment process for uranium recovery, which can greatly reduce facility investment costs.

Moreover, according to the present invention, there is an advantage in that the powder characteristics are good compared to the conventional process or the dry process, and thus a powder preparation process, which is a process of introducing an additive for producing a sintered body, is unnecessary.

### Description of Drawings

FIG. 1 is a concept view of a crystallizer according to the present invention;
FIG. 2 is a concept view of the ammonia distributor of FIG. 1;
FIGS. 3a to 3d are scanning electron microscopy (SEM) images showing an ammonium uranate hydrate powder manufactured in each experiment of the present invention;
FIG. 4 is a concept view of the crystallizer in a conventional ADU process; and
FIG. 5 is an SEM image showing an ammonium uranate hydrate powder manufactured using the conventional ADU process.

### Best Mode

Hereinafter, a detailed description will be given of the present invention.

Accordingly, the present invention pertains to a method of manufacturing an ammonium uranate hydrate crystal, suitable for the precipitation and separation of uranium, the method comprising (1) placing a uranyl nitrate aqueous solution as a mother liquor in a crystallizer, (2) forming crystals by injecting ammonia gas into the mother liquor and carrying out a crystallization reaction, and (3) stopping the crystallization reaction when the pH of the mother liquor is in the range of 7 to 8.

In step (1), the uranium concentration of the mother liquor is preferably 5 to 100 g/L.

In step (2), the ammonia gas is preferably injected at a flow rate of 0.1 to 5.0 Nm³/hr.

In step (2), air is supplied together with the ammonia gas, and the flow rate of air is preferably 10 to 100 times the flow rate of the ammonia gas.

In addition, the present invention pertains to an ammonium uranate hydrate crystal manufactured by the aforementioned method.

In addition, the present invention pertains to an ammonium uranate hydrate crystallizer, comprising a crystallizer chamber 1 having a mother liquor circulation pipe 2; and an ammonia distributor 3 directly provided to the mother liquor circulation pipe 2.

The present invention is focused on a method of increasing the crystal size of ammonium uranate hydrate in order to solve the problems with the conventional process.

The major factor affecting the crystal growth of ammonium uranate hydrate is the reaction rate. The reaction rate is associated with the uranium concentration in the uranyl nitrate aqueous solution and with the flow rate of ammonia that is injected. It is advantageous for the reaction rate to be slow for sufficient crystal growth. The reaction rate is slower with a decrease in uranium concentration and in ammonia flow rate.

Accordingly, instead of the conventional reaction of a uranyl nitrate aqueous solution and ammonia water, in the present invention, the reaction between the uranyl nitrate aqueous solution and the ammonia gas was induced as follows.

UO₂(NO₃)₂ (aq) + (x+2)NH₃ (g) + (y+1)H₂O (l) → UO₃·xNH₃·yH₂O (s) + 2NH₄NO₃ (aq)

A better understanding of the present invention will be given through the following examples. These examples are merely set forth to illustrate the present invention but are not to be construed as limiting the scope of the present invention, as is apparent to those skilled in the art.

### Example 1. Reactor preparation

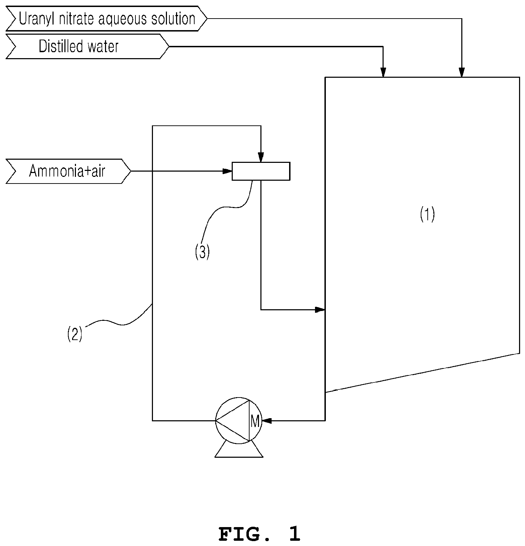

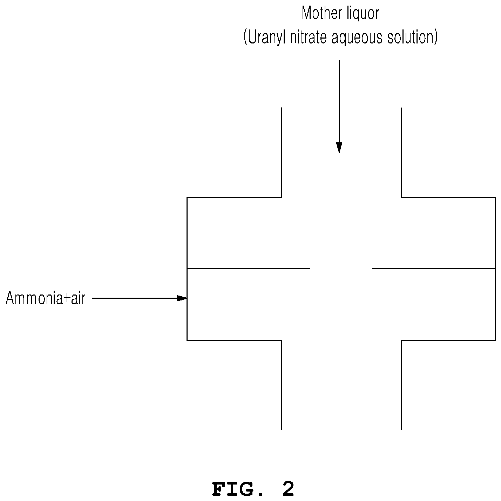

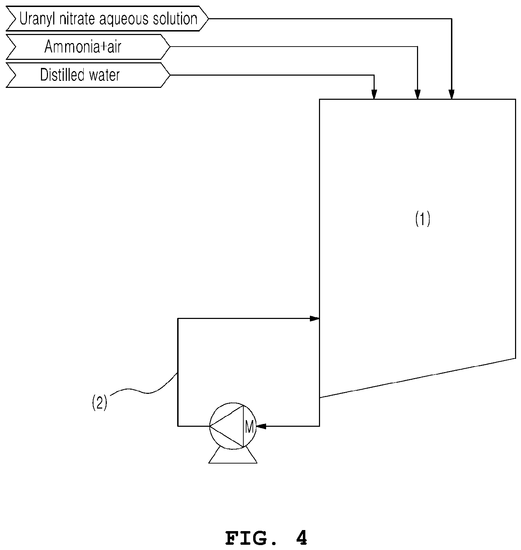

In the present invention, a crystallizer 1 in which the crystallization reaction is carried out is schematically shown in (FIG. 1), and as shown in (FIG. 2), the ammonia gas and the mother liquor may be reacted in an ammonia distributor. The reactor of the present invention is different from a conventional reactor shown in (FIG. 4) in which ammonia water (liquid) and a uranyl nitrate aqueous solution are placed together in a crystallizer.

The mother liquor, that is, the uranyl nitrate aqueous solution, is placed in a predetermined amount in the crystallizer 1. Here, the term "mother liquor" refers to a solution in which the crystallization process is performed. When the uranium concentration in the aqueous solution is high, it may be adjusted through the addition of distilled water. As such, the uranium concentration of the mother liquor is preferably 5 to 100 g/L. If the uranium concentration of the mother liquor is lower than 5 g/L, the operation time is too long, and thus operation becomes undesirable and the capacity of subsequent processes for treating the filtrate becomes excessively large relative to the amount of uranium recovered. On the other hand, if the uranium concentration is higher than 100 g/L, the reaction rate is excessively increased. After completion of the preparation of the mother liquor, the temperature of the mother liquor is gradually elevated by heating the reactor while circulating the mother liquor in the reactor. The circulation of the mother liquor continues until the reaction is terminated.

### Example 2. Crystal formation through crystallization reaction

The temperature of the mother liquor is kept constant within the range of 50 to 85°C, and the ammonia gas is injected into the ammonia distributor 3 provided to the mother liquor circulation pipe 2. Here, ammonia may be injected in the state of being diluted in combination with air. The flow rate of ammonia that is injected is preferably 0.1 to 5.0 Nm³/hr, and the flow rate of air that is injected is preferably 10 to 100 times that of ammonia. If the flow rate of ammonia that is injected is less than 0.1 Nm³/hr, the operation time is increased and operation becomes undesirable. On the other hand, if the flow rate thereof exceeds 5.0 Nm³/hr, the reaction rate is excessively increased. If the injection rate of air is less than 10 times that of ammonia, the reaction rate is excessively increased. On the other hand, if the injection rate of air is greater than 100 times that of ammonia, the capacity of subsequent processes for off-gas treatment becomes excessively large. Through the above process, an ammonium uranate hydrate crystal is formed by reacting ammonia gas with uranyl nitrate in the mother liquor.

### Example 3. Crystal recovery

After completion of the crystallization reaction in the mother liquor, the supply of ammonia gas is stopped and the solution is cooled, after which the slurry containing the formed crystal is transferred to a subsequent process (filtration) .

During the precipitation reaction, it is not necessary to supply additional substances other than ammonia and air, and the pH of the mother liquor gradually increases with the progression of the precipitation reaction. Also, whether the process is terminated is judged depending on the pH of the mother liquor, and it is preferable that the reaction be terminated when the pH of the mother liquor ranges from 7 to 8. Here, in addition to the adjustment of the flow rate of the ammonia that is supplied, there is no need for an additional operation to control the pH.

### Experiment Example 1. Confirmation of manufactured crystal powder

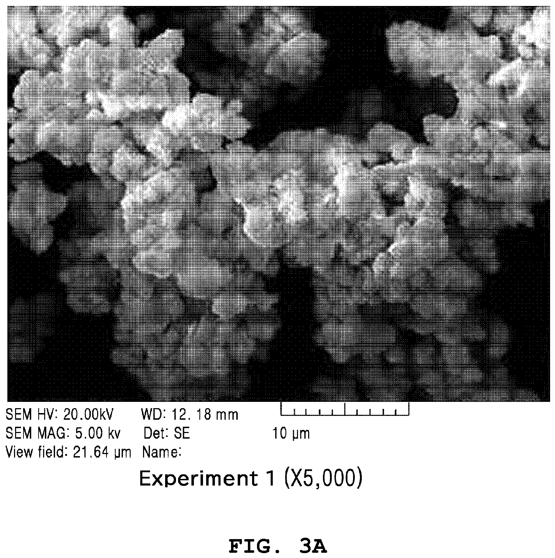

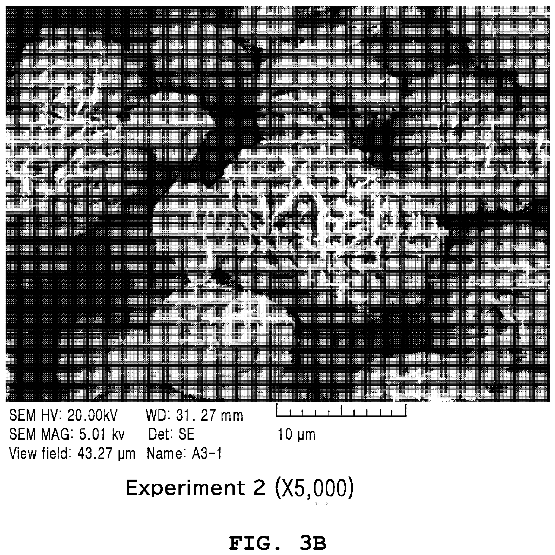

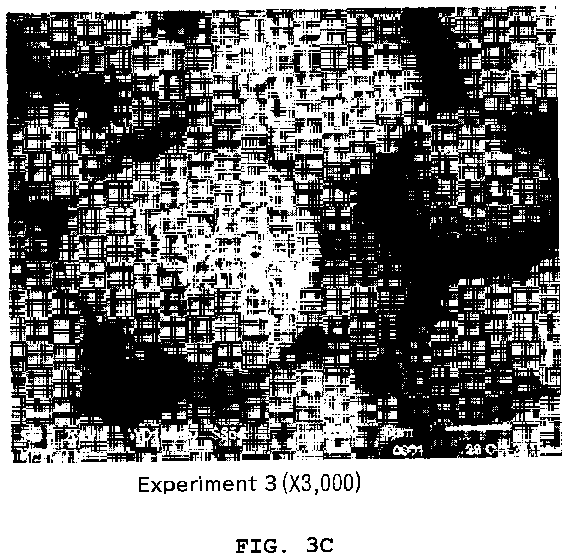

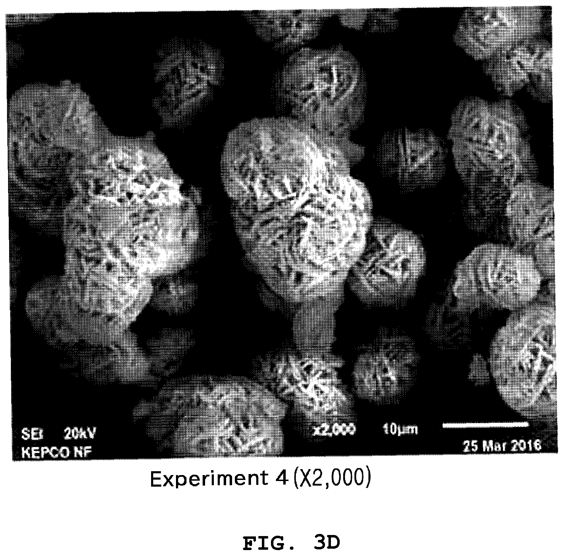

The experiment for preparation and confirmation of the ammonium uranate hydrate according to the above examples was performed four times at different reaction rates. The shape of the manufactured powder is shown in FIGS. 3a to 3d. Through this experiment, it was confirmed that the particle size varies with the reaction rate.

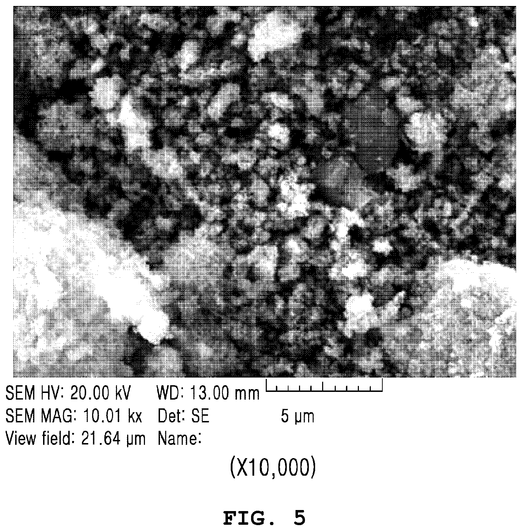

The conventional crystal had a small particle size, as shown in FIG. 5, whereas the crystal according to the present invention had a large particle size, as shown in FIGS. 3a to 3d. Specifically, the average particle size was 9.32 to 14.68 µm, which was 100 times or more the size of the crystal manufactured through the conventional ADU process. Based on filtrate analysis results, the uranium content of the filtrate was less than 1 ppm.

Although preferred embodiments of the present invention have been described for illustrative purposes, those skilled in the art will appreciate that variations or modifications of process variables in the method of the present invention are possible, without departing from the scope and spirit of the invention as disclosed in the accompanying claims.

### [Description of Reference Numerals]

1: crystallizer chamber 2: mother liquor circulation pipe
3: ammonia distributor

## Claims

1. A method of manufacturing an ammonium uranate hydrate crystal, suitable for precipitation and separation of uranium, the method comprising:
(1) placing a uranyl nitrate aqueous solution as a mother liquor in a crystallizer;
(2) forming crystals by injecting ammonia gas into the mother liquor and carrying out a crystallization reaction; and
(3) stopping the crystallization reaction when a pH of the mother liquor is in a range of 7 to 8.

2. The method of claim 1, wherein in step (1), a uranium concentration of the mother liquor is 5 to 100 g/L.

3. The method of claim 1, wherein in step (2), the ammonia gas is injected at a flow rate of 0.1 to 5.0 Nm³/hr.

4. The method of claim 1, wherein in step (2), air is supplied together with the ammonia gas, and a flow rate of the air is 10 to 100 times a flow rate of the ammonia gas.

5. An ammonium uranate hydrate crystal manufactured by the method of claim 1.

6. An ammonium uranate hydrate crystallizer, comprising:
a crystallizer chamber (1) having a mother liquor circulation pipe (2); and
an ammonia distributor (3) directly provided to the mother liquor circulation pipe (2).
